(19) Europäisches Patentamt
European Patent Office
Office européen des brevets

(11) **EP 4 303 958 A1**

(12) **EUROPEAN PATENT APPLICATION**

(43) Date of publication:
**10.01.2024 Bulletin 2024/02**

(21) Application number: **23180738.9**

(22) Date of filing: **21.06.2023**

(51) International Patent Classification (IPC):
**H01M 4/139** (2010.01) **H01M 4/36** (2006.01)
**H01M 4/62** (2006.01) **H01M 10/0562** (2010.01)
**H01M 10/058** (2010.01) *H01M 10/052* (2010.01)

(52) Cooperative Patent Classification (CPC):
**H01M 4/62; H01M 4/139; H01M 4/366;**
**H01M 10/0562; H01M 10/058;** H01M 10/052;
H01M 2300/0068; H01M 2300/008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.07.2022 JP 2022110387**

(71) Applicants:
• **TOYOTA JIDOSHA KABUSHIKI KAISHA**
**Toyota-shi, Aichi-ken, 471 8571 (JP)**

• **Panasonic Holdings Corporation**
**Osaka 571-8501 (JP)**

(72) Inventors:
• **YABE, Hiroki**
**Osaka, 571-0057 (JP)**
• **MIZUNO, Keita**
**Osaka, 571-0057 (JP)**
• **NISHIO, Yusuke**
**Osaka, 571-0057 (JP)**

(74) Representative: **D Young & Co LLP**
**120 Holborn**
**London EC1N 2DY (GB)**

(54) **ELECTRODE MATERIAL, METHOD OF PRODUCING ELECTRODE MATERIAL, AND METHOD OF PRODUCING ALL-SOLID-STATE BATTERY**

(57) An electrode material has a solid concentration of 72% or more. It includes a composite particle, a sulfide solid electrolyte, and a solvent. The composite particle includes an active material and a fluoride solid electrolyte. The fluoride solid electrolyte covers at least part of a surface of the active material. The sulfide solid electrolyte is adhered to the composite particle.

FIG.2

EP 4 303 958 A1

**Description**

CROSS REFERENCE TO RELATED APPLICATIONS

This nonprovisional application is based on Japanese Patent Application No. 2022-110387 filed on July 8, 2022, with the Japan Patent Office, the entire contents of which are hereby incorporated by reference.

BACKGROUND

Field

The present disclosure relates to an electrode material, a method of producing an electrode material, and a method of producing an all-solid-state battery.

Description of the Background Art

Japanese Patent Laying-Open No. 2014-154407 discloses covering the surface of composite particles with sulfide solid electrolyte.

SUMMARY

Hereinafter, solid electrolyte may be abbreviated as "SE". For example, sulfide solid electrolyte may be abbreviated as "sulfide SE".

Sulfide SE has high ion-conductive properties and excellent formability. Sulfide SE is suitable for bulk-type all-solid-state batteries. However, when sulfide SE comes into direct contact with active material inside the electrode, degradation of sulfide SE may be facilitated. Degradation of sulfide SE can impair ion-conductive properties, for example.

In order to reduce direct contact between sulfide SE and active material, it is suggested to cover the active material with oxide SE (such as $LiNbO_3$, for example) to form composite particles. Further, in order to facilitate interface formation between the composite particles and sulfide SE, it is suggested to cover the composite particles with sulfide SE.

As the method for covering composite particles with sulfide SE, dry process and wet process can be employed. In dry process, large mechanical load is applied to the surface of the composite particles. This can cause oxide SE to come off. When oxide SE comes off, the active material and the sulfide SE can come into direct contact with each other. As a result, post-endurance resistance increment can increase.

In wet process, the presence of solvent (liquid) may reduce the mechanical load applied to the surface of the composite particles. However, in wet process, interface formation between oxide SE and sulfide SE tends not to proceed. Due to the insufficient interface formation, post-endurance resistance increment can increase.

An object of the present disclosure is to decrease post-endurance resistance increment.

Hereinafter, the technical configuration and effects of the present disclosure will be described. It should be noted that the action mechanism according to the present specification includes presumption. The action mechanism does not limit the technical scope of the present disclosure.

1. An electrode material has a solid concentration of 72% or more. The electrode material includes a composite particle, a sulfide solid electrolyte, and a solvent. The composite particle includes an active material and a fluoride solid electrolyte. The fluoride solid electrolyte covers at least part of a surface of the active material. The sulfide solid electrolyte is adhered to the composite particle.

The electrode material according to "1" above includes a solvent. That is, the electrode material may be produced by a wet process. A surface of the composite particle is covered by the fluoride SE. According to a novel finding of the present disclosure, interface formation between fluoride SE and sulfide SE may relatively readily proceed even in a wet process. Further, in a wet process, fluoride SE tends not to come off.

The electrode material has a solid concentration of 72% or more. With this, stable high-shear mixing of the electrode material tends to be achieved. Stable high-shear mixing allows for dense covering of the surface of the composite particle with the sulfide SE. As a result of the above actions working synergistically, post-endurance resistance increment is expected to be decreased.

2. In the electrode material according to "1" above, the fluoride solid electrolyte may be represented by the following formula (1), for example:

$$Li_{6-nx}M_xF_6 ... \qquad (1)$$

where x satisfies $0<x<2$, M is at least one selected from the group consisting of semimetal atoms and metal atoms except Li, and n represents an oxidation number of M.

The fluoride SE in the above formula (1) may relatively readily form an interface with the sulfide SE. Further, an increase of the reaction resistance of the fluoride SE is expected to be slow during endurance.

3. In the electrode material according to "2" above, M in the above formula (1) may include an atom whose oxidation number is +4, for example.

4. In the electrode material according to "2" above, M in the above formula (1) may include an atom whose oxidation number is +3, for example.

5. In the electrode material according to "2" above, M in the above formula (1) may include at least one selected from the group consisting of Ca, Mg, Al, Y, Ti, and Zr, for example.

6. The electrode material according to any one of "1" to "5" above may have a solid concentration from 75.5 to 82%, for example.

When the solid concentration is from 75.5 to 82%, resistance increment is expected to be decreased. It may be because stable high-shear mixing tends to be achieved.

7. A method of producing an electrode material includes the following (a) and (b):

    (a) preparing a composite particle; and
    (b) producing an electrode material that includes the composite particle, a sulfide solid electrolyte, and a solvent.

The composite particle includes an active material and a fluoride solid electrolyte. The fluoride solid electrolyte covers at least part of a surface of the active material. The electrode material has a solid concentration of 72% or more.
The (b) includes the following (b1) and (b2):

(b1) high-shear mixing a mixture that includes the composite particle, the sulfide solid electrolyte, and the solvent; and
(b2) adding an additional amount of the solvent to the mixture.

The (b1) and the (b2) are carried out alternately, twice or more for each.
By the high-shear mixing of the mixture that includes the composite particle, the sulfide SE, and the solvent, the surface of the composite particle may be covered with the sulfide SE. During high-shear mixing, solvent may partially evaporate and/or solvent may be absorbed by powder, to cause a shortage of solvent. When the amount of solvent is not enough, high-shear mixing may not be maintained, potentially causing insufficient dispersion. In the production method according to "7" above, high-shear mixing and solvent addition are repeated alternately. By this, solvent shortage may be avoided, allowing high-shear mixing to be continued. As a result, it is expected that the surface of the composite particle will be densely covered with the sulfide SE.
With regard to high-shear mixing, the final amount (the total amount) of the solvent added to the mixture is determined in consideration of the amount to be absorbed by powder as well as the amount to volatilize during mixing. If the solvent is not added in small portions but the final amount is added at once, the mixture can become liquid. When the composite particle (powder) includes fluoride SE, in particular, absorption of solvent into the powder tends to be slow. Because of this, powder that includes fluoride SE has a marked tendency to become liquid. If the mixture becomes liquid, high-shear mixing may not be continued and thereby covering treatment may not be achieved in a desirable manner.

8. A method of producing an all-solid-state battery includes the following (c) and (d):

    (c) producing an electrode that includes the electrode material according to any one of " 1" to "6" above; and
    (d) producing an all-solid-state battery that includes the electrode.

The production method according to "8" above is expected to produce an all-solid-state battery that has a low resistance increment at the time of endurance.
Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.
The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a schematic flowchart for a production method according to the present embodiment.
Fig. 2 is a conceptual view illustrating the progress of high-shear mixing.
Fig. 3 is a conceptual view of an all-solid-state battery according to the present embodiment.

DESCRIPTION OF THE PREFERRED EMBODIMENTS

<Terms and Definitions Thereof, etc.>

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.
"At least one of A and B" includes "A or B" and "A and B". "At least one of A and B" may also be expressed as "A and/or B".
Expressions such as "may" and "can" are not intended to mean "must" (obligation) but rather mean "there is a possibility" (tolerance).
A singular form also includes its plural meaning, unless otherwise specified. For example, "a particle" may mean not only "one particle" but also "a group of particles (powder, particles)".
Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.
A numerical range such as "from m to n%" includes both the upper limit and the lower limit. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.
All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.
When a compound is represented by a stoichiometric composition formula (such as "$LiCoO_2$", for example), this stoichiometric composition formula is merely a typical example of the compound. The compound may have a non-stoichiometric composition. For example, when lithium cobalt oxide is represented as "$LiCoO_2$", the composition ratio of lithium cobalt oxide is not limited to "Li/Co/O = 1/1/2" but Li, Co, and O may be included in any composition ratio, unless otherwise specified. Further, doping with a trace element and/or substitution may also be tolerated.
"Semimetal" includes B, Si, Ge, As, Sb, and Te. "Metal" refers to an element belonging to Group 1 to Group 16 of the periodic table except "H, B, Si, Ge, As, Sb, Te, C, N, P, O, S, and Se". When an inorganic compound includes at least one of a semimetal and a metal as well as F, the semimetal and/or the metal may have a positive (+) oxidation number.
"Electrode" collectively refers to a positive electrode and a negative electrode. An electrode may be either a positive electrode or a negative electrode.
"Thickness of coating" with fluoride SE may be measured by the procedure described below. A composite particle is embedded into a resin material to prepare a sample. With the use of an ion milling apparatus, a cross section of the sample is exposed. For example, "Arblade (registered trademark) 5000" (trade name) manufactured by Hitachi High-Technologies (or a similar product) may be used. The cross section of the sample is examined by an SEM (Scanning Electron Microscope). For example, "SU8030" (trade name) manufactured by Hitachi High-Technologies (or a similar product) may be used. For each of ten composite particles, the thickness of fluoride SE is measured in twenty fields of view. The arithmetic mean of a total of 200 thickness measurements is regarded as the thickness of coating. The thickness of coating with fluoride SE may also be called "buffer layer thickness".

The thickness of coating may be measured in an elemental mapping image captured by SEM-EDX (Energy Dispersive X-ray Spectrometry). In an elemental mapping image, an element is selected from each component, to represent the component. For example, Ni may be selected as a representative element for active material, and F may be selected as a representative element for fluoride SE.

"Covering rate" is measured by the procedure described below. In the same manner as for the coating thickness measurement sample, a composite particle cross-sectional sample is prepared. In a cross-sectional SEM image, the length of the contour of active material is measured ($L_0$). The length of the portion of the contour of the active material (core particle) that is covered by fluoride SE is measured ($L_1$). $L_1$ is divided by $L_0$, and the percentage of the resulting value is the covering rate. The covering rate is measured for each of twenty composite particles. The arithmetic mean of the twenty covering rates is regarded as "the covering rate".

For example, $L_0$ and $L_1$ may be calculated by image processing of an SEM-EDX elemental mapping image.

"Hollow particle" refers to a particle that has a central cavity whose area occupies 30% or more of the entire cross-sectional area of the particle in a cross-sectional image (such as a cross-sectional SEM image, for example) of the particle. "Solid particle" refers to a particle that has a central cavity whose area occupies less than 30% of the entire cross-sectional area of the particle in a cross-sectional image of the particle.

"D50" refers to a particle size in volume-based particle size distribution at which cumulative frequency of particle sizes accumulated from the small size side reaches 50%. D50 may be measured with a laser-diffraction particle size distribution analyzer.

"Average Feret diameter" is measured in a two-dimensional image of particles. The arithmetic mean of the maximum Feret diameters of twenty or more particles is "the average Feret diameter".

"Solid concentration" refers to the proportion of the total mass of all the components other than solvent relative to the entire mass of the mixture. The solid concentration is expressed in percentage.

"Solvent" refers to a liquid material that exhibits dissolution force to a solute of some kind. The solute may be of any type. The solvent does not need to actually dissolve an solute. A liquid material with dissolution force that is used for purposes other than dissolving a solute is also called "solvent".

<Electrode Material>

An electrode material is in a wet state. The electrode material may be in granular form, powder form, clay form, and/or the like, for example. The electrode material is a raw material of an electrode. For example, a slurry that includes the electrode material may be formed. The resulting slurry may be applied to the surface of a base material to produce an electrode. The electrode material includes a composite particle, a sulfide SE, and a solvent.

<<Composite Particle>>

The composite particle includes an active material and a fluoride SE. The composite particle may have a D50 from 1 to 30 $\mu$m, or from 3 to 20 $\mu$m, or from 5 to 15 $\mu$m, for example. The composite particle may have any shape. The composite particle may be spherical, elliptical, flakes, fibrous, or the like, for example.

(Fluoride Solid Electrolyte)

The fluoride SE is a shell for the composite particle. The fluoride SE is present between the active material and the sulfide SE. The SE inserted between the active material and the sulfide SE is also called "a buffer layer". The fluoride SE may facilitate interface formation between itself and the sulfide SE, even in the co-presence of the solvent. The fluoride SE covers at least part of the surface of the active material. The thickness of the coating may be from 1 to 100 nm or from 1 to 50 nm, for example. The amount of the fluoride SE to be used may be, for example, from 1 to 10 parts by mass or from 2 to 3 parts by mass relative to 100 parts by mass of the active material.

The fluoride SE may cover the entire surface of the active material, or may cover part of the surface thereof. The fluoride SE may be distributed on the surface of the active material, in the form of islands. The covering rate may be from 50 to 100%, or from 60 to 100%, or from 70 to 100%, or from 80 to 100%, or from 90 to 100%, for example. The higher the covering rate is, the more decreased the initial resistance is expected to be, for example.

The composition of the fluoride SE is not particularly limited as long as it includes F. For example, the fluoride SE may include Li and F.

For example, the fluoride SE may be represented by the following formula (1):

$$Li_{6-nx}M_xF_6 ... \qquad (1)$$

In the above formula (1), x satisfies $0<x<2$. M is at least one selected from the group consisting of semimetal atoms and metal atoms except Li. n represents an oxidation number of M.

M in the above formula (1) may consist of a single atom, or may consist of a plurality of types of atoms. When M consists of a plurality of types of atoms, n refers to the weighted average of the oxidation numbers of the atoms. For example, when M includes Ti (oxidation number = +4) and Al (oxidation number = +3) with the molar ratio between Ti and Al being "Ti/Al=3/7" and also x=1 is satisfied, the numerical expression "$n=0.3\times4+0.7\times3$" gives n=3.3.

x in the above formula (1) may satisfy $0.1\leq x\leq1.9$, $0.2\leq x\leq1.8$, $0.3\leq x\leq1.7$, $0.4\leq x\leq1.6$, $0.5\leq x\leq1.5$, $0.6\leq x\leq1.4$, $0.7\leq x\leq1.3$, $0.8\leq x\leq1.2$, or $0.9\leq x\leq1.1$, for example.

For example, M may include an atom whose oxidation number is +4. For example, M may include an atom whose oxidation number is +3. For example, M may include both an atom whose oxidation number is +4 and an atom whose oxidation number is +3.

For example, M in the above formula (1) may include at least one selected from the group consisting of Ca, Mg, Al, Y, Ti, and Zr. For example, M may include at least one selected from the group consisting of Al, Y, and Ti. For example, M may include at least one selected from the group consisting of Al and Ti.

For example, the fluoride SE may be represented by the following formula (2):

$$Li_{3-x}Ti_xAl_{1-x}F_6 ... \qquad (2)$$

where x may satisfy $0\leq x\leq1$, $0.1\leq x\leq0.9$, $0.2\leq x\leq0.8$, $0.3\leq x\leq0.7$, or $0.4\leq x\leq0.6$, for example.

(Active Material)

The active material is the core of the composite particle. The active material is in particle form. For example, the active material may be a secondary particle. The secondary particle is a group of primary particles. The secondary particle may have a D50 from 1 to 30 $\mu$m, or from 3 to 20 $\mu$m, or from 5 to 15 $\mu$m, for example. The primary particle may have an average Feret diameter from 0.01 to 3 $\mu$m, for example.

The active material may have any shape. The active material may be spherical, elliptical, flakes, fibrous, or the like, for example. The active material may be solid particles, or may be hollow particles.

The active material may be a positive electrode active material, for example. The positive electrode active material may cause positive electrode reaction. The positive electrode active material may include any component. The positive electrode active material may include, for example, at least one selected from the group consisting of $LiCoO_2$, $LiNiO_2$, $LiMnO_2$, $LiMn_2O_4$, $Li(NiCoMn)O_2$, $Li(NiCoAl)O_2$, $Li(NiCoMnAl)O_2$, and $LiFePO_4$. "(NiCoMn)" in "$Li(NiCoMn)O_2$", for example, means that the constituents within the parentheses are collectively regarded as a single unit in the entire composition ratio. As long as (NiCoMn) is collectively regarded as a single unit in the entire composition ratio, the amounts of individual constituents are not particularly limited. $Li(NiCoMn)O_2$ may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$. For example, $Li(NiCoAl)O_2$ may include $LiNi_{0.8}Co_{0.15}Al_{0.05}O_2$ and/or the like.

For example, the positive electrode active material may be represented by the following formula (3):

$$Li_{1-y}Ni_xM_{1-x}O_2 ... \qquad (3)$$

$$0.5\leq x\leq1$$

$$-0.5\leq y\leq0.5$$

In the above formula (3), M may include at least one selected from the group consisting of Co, Mn, and Al, for example. x may be 0.6 or more, or may be 0.7 or more, or may be 0.8 or more, or may be 0.9 or more, for example.

The positive electrode active material may include an additive, for example. The additive may be a substituted solid solution atom, an intruding solid solution atom, or the like, for example. The additive may be an adherent adhered to the surface of the positive electrode active material (primary particle). The adherent may be an elementary substance, an oxide, a carbide, a nitride, a halide, and/or the like, for example. The amount to be added may be from 0.01 to 0.1, or from 0.02 to 0.08, or from 0.04 to 0.06, for example. The amount to be added refers to the ratio of the amount of substance of the additive to the amount of substance of the positive electrode active material. The additive may include, for example, at least one selected from the group consisting of B, C, N, halogens, Sc, Ti, V, Cu, Zn, Ga, Ge, Se, Sr, Y, Zr, Nb, Mo, In, Sn, W, and lanthanoids.

The active material may be a negative electrode active material, for example. The negative electrode active material may cause negative electrode reaction. The negative electrode active material may include any component. The negative electrode active material may include, for example, at least one selected from the group consisting of natural graphite, artificial graphite, soft carbon, hard carbon, Si, $SiO_x$ (0<x<2), Si-based alloy, Sn, $SnO_x$ (0<x<2), Li, Li-based alloy, and $Li_4Ti_5O_{12}$. $SiO_x$ (0<x<2) may be doped with Mg and/or the like, for example. By having an alloy-based active material (such as Si, for example) supported by a carbon-based active material (such as graphite, for example), a composite material may be formed.

«Sulfide Solid Electrolyte»

The sulfide SE, together with the solvent, is adhered to the surface of the composite particle. The sulfide SE may cover the surface of the composite particle. The sulfide SE is in particle form. The sulfide SE may have a D50 from 0.01 to 1 $\mu$m or from 0.1 to 0.9 $\mu$m, for example. The amount of the sulfide SE to be used may be, for example, from 0.1 to 20 parts by mass or from 0.5 to 15 parts by mass, relative to 100 parts by mass of the active material.

The sulfide SE may exhibit high ion-conductive properties. The composition of the sulfide SE is not particularly limited as long as it includes S (sulfur). The sulfide SE may include Li, P, and S, for example. The sulfide SE may further include O, Ge, Si, and/or the like, for example. The sulfide SE may further include a halogen and/or the like, for example. The sulfide SE may further include I, Br, and/or the like, for example. The sulfide SE may be of glass ceramic type or may be of argyrodite type, for example. The sulfide SE may include, for example, at least one selected from the group consisting of $LiI$-$LiBr$-$Li_3PS_4$, $Li_2S$-$SiS_2$, $LiI$-$Li_2S$-$SiS_2$, $LiI$-$Li_2S$-$P_2S_5$, $LiI$-$Li_2O$-$Li_2S$-$P_2S_5$, $LiI$-$Li_2S$-$P_2O_5$, $LiI$-$Li_3PO_4$-$P_2S_5$, $Li_2S$-$GeS_2$-$P_2S_5$, $Li_2S$-$P_2S_5$, $Li_4P_2S_6$, $Li_7P_3S_{11}$, and $Li_3PS_4$.

For example, "$LiI$-$LiBr$-$Li_3PS_4$" refers to a sulfide SE produced by mixing $LiI$, $LiBr$, and $Li_3PS_4$ in any molar ratio. For example, sulfide SE may be produced by a mechanochemical method. "$Li_2S$-$P_2S_5$" includes $Li_3PS_4$. $Li_3PS_4$ may be produced by mixing $Li_2S$ and $P_2S_5$ in "$Li_2S/P_2S_5$ = 75/25 (molar ratio)", for example.

<<Solvent>>

The solvent is liquid. The solvent may facilitate adhesion between the composite particle and the sulfide SE during high-shear mixing. The solvent may function as a dispersion medium in the slurry. The solvent may include any component. The solvent may include, for example, at least one selected from the group consisting of aromatic hydrocarbons, esters, alcohols, ketones, and lactams. The solvent may include, for example, at least one selected from the group consisting of tetralin (1,2,3,4-tetrahydronaphthalene, THN), butyl butyrate, heptane, and N-methyl-2-pyrrolidone (NMP).

Butyl butyrate is expected to be less likely to degrade the sulfide SE, as compared to NMP and the like, for example. THN is expected to be less likely to degrade the sulfide SE, as compared to butyl butyrate, NMP, and the like, for example. When the solvent includes THN, initial resistance is expected to be decreased, for example.

The electrode material has a solid concentration of 72% or more. When the solid concentration is 72% or more, the solvent tends to be retained inside the powder, allowing for easier high-shear mixing. The solid concentration may be 74% or more, or may be 75.5% or more, or may be 76% or more, or may be 78% or more, for example. When the solid concentration is 76% or more, solid-liquid separation tends not to occur during mixing, and thereby stable high-shear mixing tends to be achieved. The solid concentration during high-shear mixing may be 90% or less, for example. When the solid concentration is 90% or less, the mixture tends to become uniformly wet, and thereby stable high-shear mixing tends to be achieved. The solid concentration may be 88% or less, may be 85% or less, may be 83% or less, or may be 82% or less, for example. The solid concentration may be from 75.5 to 82%, for example. Within the above range, dispersion tends to be facilitated. When dispersion is facilitated, resistance increment is expected to be decreased, for example.

<Method of Producing Electrode Material>

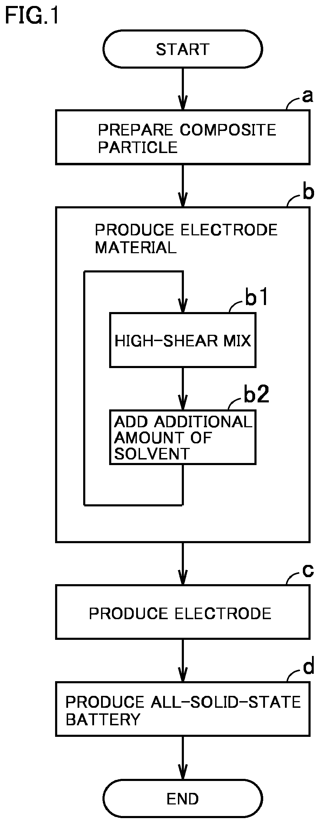

Fig. 1 is a schematic flowchart for a production method according to the present embodiment. Hereinafter, "the production method according to the present embodiment" may also be simply called "the present production method".

The present production method includes "a method of producing an electrode material". The method of producing an electrode material includes "(a) preparing a composite particle" and "(b) producing an electrode material".

<<(a) Preparing Composite Particle>>

The present production method includes preparing the composite particle. The composite particle may be prepared by any method. For example, the composite particle may be formed by a dry mechanochemical method. For example, the composite particle may be formed by mixing the active material and the fluoride SE in a particle composing machine. Examples of the particle composing machine include "Nobilta NOB-MINI" manufactured by Hosokawa Micron. However, as long as it is capable of composing particles, any mixing apparatus, any granulating apparatus, and/or the like may be used.

<<(b) Producing Electrode Material>>

The present production method includes producing an electrode material that includes the composite particle, the sulfide SE, and the solvent. The electrode material may be produced by high-shear mixing. In the present production method, as long as it is capable of high-shear mixing, any mixing/kneading apparatus may be used. For example, a planetary centrifugal mixer and/or the like may be used.

For example, firstly, the sulfide SE (powder) may be dispersed into the solvent (liquid) to prepare a dispersion. In the present production method, any dispersing apparatus may be used. For example, an ultrasonic homogenizer and/or the like may be used.

Then, the composite particle (powder) and the dispersion are fed into a mixing/kneading apparatus. As the mixture is being stirred, the mixture starts to become viscous. For example, the mixture may be stirred at a number of revolutions from 50 to 100 rpm for 1 minute to 1 hour. The mixing conditions (such as the number of revolutions, the duration of mixing, and the like) may vary depending on the powder properties, the apparatus specifications, and/or the like, for example,

In the present production method, "(b 1) high-shear mixing" and "(b2) adding an additional amount of the solvent" are carried out alternately, twice or more for each. In (b 1), the mixture is high-shear mixed. In (b2), an additional amount of the solvent is added to the mixture. By (b 1) and (b2) alternately carried out, the composite particle may be densely covered with the sulfide SE. For example, (b 1) and (b2) may be alternately carried out three times or more, or four times or more, for each. For example, (b 1) and (b2) may be alternately carried out five times or less, or four times or less, or three times or less, for each.

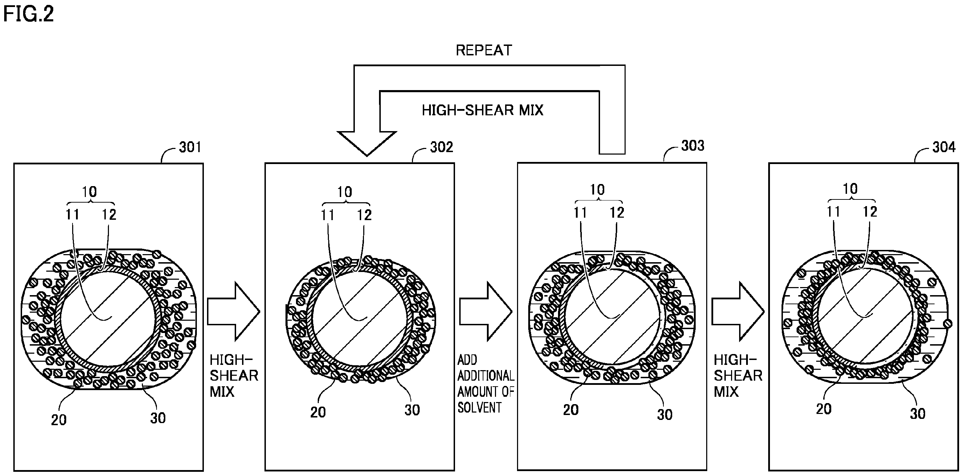

Fig. 2 is a conceptual view illustrating the progress of high-shear mixing.

A first state 301 is a state before high-shear mixing. A composite particle 10 has fluoride SE (a fluoride solid electrolyte 12) covering an active material 11. In first state 301, composite particle 10 is surrounded by a solvent 30. In solvent 30, sulfide SE (a sulfide solid electrolyte 20) is dispersed. When the surface of composite particle 10 is covered with the fluoride SE, absorption of solvent 30 into the surface of composite particle 10 tends not to proceed.

By "(b1) high-shear mixing", first state 301 transitions to a second state 302. In second state 302, surface properties of composite particle 10 change and thereby absorption of solvent 30 proceeds. Further, solvent 30 may partially evaporate. Due to the decrease of solvent 30, solvent 30 (liquid) appears to be dispersed in solid. In second state 302, the amount of solvent 30 is not enough for high-shear mixing.

By "(b2) adding an additional amount of the solvent", second state 302 transitions to a third state 303. In third state 303, more solvent 30 is added to reach the amount enough for high-shear mixing. After solvent 30 is thus added, "(b1) high-shear mixing" is carried out again and thereby third state 303 transitions back to second state 302. By "(b 1) high-shear mixing" and "(b2) adding an additional amount of the solvent" alternately repeated, a dense covering layer (sulfide SE) is gradually formed.

As the covering layer becoming denser, second state 302 and third state 303 transition to a fourth state 304. That is, covering treatment is completed, and an electrode material may be completed.

It is not necessary for the entire amount of the sulfide SE present in the system to contribute to forming the covering layer. Part of the sulfide SE may be free from composite particle 10, without contributing to forming the covering layer. As the high-shear mixing proceeds, the covering layer (sulfide SE) may gradually transform into a film. The covering layer may eventually become smooth. The covering layer may eventually become irregular on its surface.

<Method of Producing All-Solid-State Battery>

The present production method may include "a method of producing an all-solid-state battery". The method of producing an all-solid-state battery includes "(c) producing an electrode" and "(d) producing an all-solid-state battery", in addition to "(a) preparing a composite particle" and "(b) producing an electrode material".

<<(c) Producing Electrode>>

The present production method may include producing an electrode that includes the electrode material. For example, a slurry that includes the electrode material may be formed. The resulting slurry may be applied to the surface of a base material and dried to produce an electrode.

(Slurry)

For example, the electrode material, an electron-conducting material, an ion-conducting material, a binder, and a solvent may be mixed together to form a slurry. For example, an ultrasonic homogenizer and/or the like may be used to carry out dispersion treatment of the mixture. The solid concentration of the slurry may be from 50 to 70%, for example.

The electron-conducting material may form an electron conduction path in the electrode. The amount of the electron-conducting material to be used is not particularly limited. The amount of the electron-conducting material to be used may be, for example, from 0.1 to 10 parts by mass relative to 100 parts by mass of the active material. The electron-conducting material may include any component. The electron-conducting material may include, for example, at least one selected from the group consisting of carbon black (CB), vapor grown carbon fiber (VGCF), carbon nanotube (CNT), and graphene flake (GF). CB may include, for example, at least one selected from the group consisting of acetylene black (AB), Ketjenblack (registered trademark), and furnace black.

The ion-conducting material may form an ion conduction path in the electrode. The ion-conducting material may be in particle form. The ion-conducting material may have a D50 from 0.01 to 1 $\mu$m, or from 0.01 to 0.95 $\mu$m, or from 0.1 to 0.9 $\mu$m, for example. The amount of the ion-conducting material to be used is not particularly limited. The amount of the ion-conducting material to be used may be, for example, from 1 to 200 parts by volume, or from 50 to 150 parts by volume, or from 50 to 100 parts by volume, relative to 100 parts by volume of the active material. The ion-conducting material may include sulfide SE, fluoride SE, and/or the like, for example. The sulfide SE and the fluoride SE included in the ion-conducting material may be of the same type as, or a different type from, the sulfide SE and the fluoride SE, respectively, included in the electrode material.

The binder is capable of binding the solid materials to each other. The amount of the binder to be used may be, for example, from 0.1 to 10 parts by mass relative to 100 parts by mass of the active material. The binder may include any component. The binder may include, for example, at least one selected from the group consisting of polyvinylidene difluoride (PVdF), vinylidene difluoride-hexafluoropropylene copolymer (PVdF-HFP), styrene-butadiene rubber (SBR), butadiene rubber (BR), and polytetrafluoroethylene (PTFE).

(Application)

In the present production method, any application apparatus may be used. For example, a die coater, a roll coater, and/or the like may be used. The slurry may be applied to the surface of a base material. The base material may be electrically conductive. The base material may function as a current collector. The base material may be in sheet form, or may be in mesh form, for example. The base material may have a thickness from 5 to 50 $\mu$m, for example. The base material may include a metal foil, a metal mesh, a porous metal body, and/or the like, for example. The base material may include, for example, at least one selected from the group consisting of Al, Cu, Ni, Cr, Ti, and Fe. The base material may include an Al foil, an Al alloy foil, a Ni foil, a Cu foil, a Cu alloy foil, a Ti foil, a stainless steel foil, and/or the like, for example. The surface of the metal foil may be covered with a carbon layer. For example, the carbon layer may include a conductive carbon material (such as AB, for example).

The slurry is dried on the surface of the base material to form an active material layer. In the present production method, any drying apparatus may be used. For example, a hot plate, a hot-air dryer, an infrared dryer, and/or the like may be used.

After the slurry is dried, the electrode may be subjected to press work. For example, cold pressing may be carried out, or hot pressing may be carried out. In the present production method, any pressing apparatus may be used. For example, a roll-press apparatus and/or the like may be used. In the case of hot pressing, the pressing temperature may be adjusted depending on the type of the binder and/or the like, for example. The pressing temperature may be from 80 to 180°C, for example. After the press work, the active material layer may have a thickness from 10 to 200 $\mu$m, for example. After the press work, the active material layer may have a density from 2 to 4 g/cm$^3$, for example.

<<(d) Producing All-Solid-State Battery>>

The present production method may include producing an all-solid-state battery that includes the electrode.

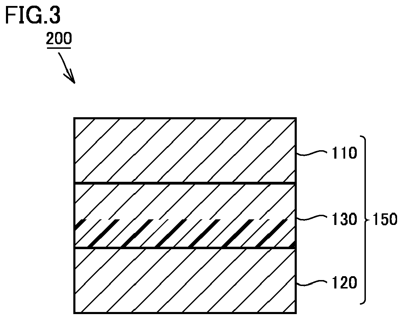

Fig. 3 is a conceptual view of an all-solid-state battery according to the present embodiment.

For example, a power generation element 150 may be formed. Power generation element 150 may be formed by stacking a positive electrode 110, a separator layer 130, and a negative electrode 120. At least one of positive electrode 110 and negative electrode 120 is the electrode obtained in the above-described manner. Separator layer 130 is interposed between positive electrode 110 and negative electrode 120. Separator layer 130 may include an ion-conducting material and a binder, for example. Separator layer 130 may be formed by applying a slurry to the surface of at least one of positive electrode 110 and negative electrode 120, for example.

After power generation element 150 is formed, power generation element 150 may be subjected to hot pressing. By hot pressing, power generation element 150 is expected to become dense.

To power generation element 150, a lead tab, an external terminal, and/or the like may be connected, for example. Power generation element 150 is placed in an exterior package (not illustrated). The exterior package may be hermetically sealed. By placing power generation element 150 in the exterior package, an all-solid-state battery 200 may be completed.

The exterior package may have any configuration. The exterior package may be a pouch made of metal foil laminated film, and/or the like, for example. The exterior package may be a metal case and/or the like, for example. The exterior package may include Al and/or the like, for example. The exterior package may accommodate a single power generation element 150, or may accommodate a plurality of power generation elements 150. The plurality of power generation elements 150 may form a series circuit, or may form a parallel circuit.

[Examples]

<Experiment 1>

In Experiment 1, composite particles were investigated. Electrode materials and all-solid-state batteries according to Nos. 1-1 to 1-4 below were produced. For example, "the electrode material according to No. 1-1" and the like may be simply called "No. 1-1" hereinafter.

«No. 1-1»

As an active material, $Li(NiCoAl)O_2$ was prepared. Hereinafter, "$Li(NiCoAl)O_2$" may be abbreviated as "NCA".

LiF, $TiF_4$, and $AlF_3$ were mixed together in a planetary ball mill to synthesize a fluoride SE. The composition of the fluoride SE was $Li_{2.7}Ti_{0.3}Al_{0.7}F_6$. Hereinafter, "$Li_{2.7}Ti_{0.3}Al_{0.7}F_6$" may be abbreviated as "LTAF".

As a particle composing machine, "Nobilta NOB-MINI (manufactured by Hosokawa Micron)" was prepared. Within the particle composing machine, 48.7 parts by mass of NCA and 1.3 parts by mass of LTAF were subjected to composing treatment to form composite particles. The conditions for operating the apparatus are as follows.

Electric power: 12 W per 1 g of material
Number of revolutions: 6000 rpm
Duration of treatment: 30 minutes
The below materials were prepared.
Sulfide SE: $Li_2S$-$P_2S_5$ (glass ceramic)
Solvent: THN
Hereinafter, "$Li_2S$-$P_2S_5$" may be abbreviated as "LPS".

The procedure from this point onward was carried out in an environment where the dew point temperature was controlled to be -70°C or less. As a dispersing apparatus, an ultrasonic homogenizer was prepared. With the use of the ultrasonic homogenizer, 98.4 parts by mass of the sulfide SE was dispersed into 229.6 parts by mass of the solvent to prepare a dispersion.

As a mixing/kneading apparatus, a planetary mixer was prepared. Into the mixing/kneading apparatus, 1000 parts by mass of the composite particles was fed. Further, the dispersion obtained in the above-described manner was fed into the mixing/kneading apparatus.

"High-shear mixing" and "adding an additional amount of the solvent" were repeated alternately in the below-described order to produce an electrode material. The electrode material had the composite particle covered with the sulfide SE.

(1) High-shear mixing: Number of revolutions = 70 rpm, Duration = 10 minutes
(2) Addition of additional amount of solvent: THN (34 parts by mass)
(3) High-shear mixing: Number of revolutions = 100 rpm, Duration = 10 minutes
(4) Addition of additional amount of solvent: THN (37 parts by mass)
(5) High-shear mixing: Number of revolutions = 100 rpm, Duration = 10 minutes

(6) Addition of additional amount of solvent: THN (23 parts by mass)

(7) High-shear mixing: Number of revolutions = 100 rpm, Duration = 4 hours

With the use of an ultrasonic homogenizer, the electrode material, an ion-conducting material (LPS), and an electron-conducting material (AB + VGCF) were dispersed into the solvent (THN) to prepare a slurry. The resulting slurry was applied to the surface of a base material and dried to produce a positive electrode. Further, an all-solid-state battery including the positive electrode was produced. The all-solid-state battery had the configuration as described below.

Exterior package: Al-laminated film

Negative electrode active material: $Li_4Ti_5O_{12}$

<<No. 1-2>>

With the use of an ultrasonic homogenizer, the composite particle according to No. 1-1, an ion-conducting material, and an electron-conducting material were dispersed into the solvent to prepare a slurry. Except this, the same procedure as in No. 1-1 was carried out to produce a positive electrode and an all-solid-state battery. In No. 1-2, the composite particle was not subjected to high-shear mixing (treatment to cover with sulfide SE).

<<No. 1-3>>

Lithium ethoxide, pentaethoxyniobium, and super dehydrated ethanol were mixed together to prepare a precursor solution. The surface of NCA was coated with the precursor solution to form composite particles. The resulting composite particles were subjected to heat treatment to produce oxide SE. The composition of the oxide SE was $LiNbO_3$.

With the use of an ultrasonic homogenizer, 98.4 parts by mass of the sulfide SE was dispersed into 229.6 parts by mass of the solvent to prepare a dispersion. 1000 parts by mass of the composite particles was fed into a mixing/kneading apparatus. Further, the dispersion obtained in the above-described manner was fed into the mixing/kneading apparatus.

69 parts by mass of the solvent was fed into the mixing/kneading apparatus. High-shear mixing was carried out at a number of revolutions of 100 rpm for 4 hours. Except for these, the same procedure as in No. 1-1 was carried out to produce a positive electrode and an all-solid-state battery.

<<No. 1-4>>

A positive electrode and an all-solid-state battery were produced in the same manner as in No. 1-3 except that the composite particle was not subjected to high-shear mixing (treatment to cover with sulfide SE).

<<No. 1-5>>

The same procedure as in No. 1-1 was carried out up until the point of feeding 1000 parts by mass of the composite particles and the dispersion into the mixing/kneading apparatus.

94 parts by mass of the solvent was added to the mixture. This amount, 94 parts by mass, corresponds to the final amount (the total amount) of the solvent in No. 1-1. After this addition of the solvent, a first high-shear mixing was carried out (number of revolutions = 70 rpm, duration = 10 minutes). Then, a second high-shear mixing (number of revolutions = 100 rpm, duration = 10 minutes) was carried out. During the second high-shear mixing, the mixture became liquid. Because of this, the treatment to cover with the sulfide SE was not completed. In No. 1-5, the solvent was not added in portions, but it was added at once.

«Evaluation»

The SOC (State Of Charge) of the all-solid-state battery was adjusted to 50%. At an hour rate of 60.2 C, the all-solid-state battery was discharged for 10 seconds. From the amount of voltage drop during discharging as well as the current, initial discharge resistance (direct-current resistance) was determined. Discharge resistance was determined after a lapse of 0.1 seconds, 2 seconds, and 10 seconds from the start of discharging.

Further, at an hour rate of 60.2 C, the all-solid-state battery was charged for 5 seconds. From the amount of voltage increase during charging as well as the current, initial charge resistance (direct-current resistance) was determined. Charge resistance was determined after a lapse of 0.1 seconds, 1 second, and 5 seconds from the start of charging.

After the initial discharge resistance and the initial charge resistance were measured, endurance testing was carried out. More specifically, pulse cycles of charge and discharge were carried out under the conditions described below.

Testing temperature: 80°C
SOC range: 50 to 60%
Number of cycles of charge and discharge: 800

After the endurance testing, post-endurance discharge resistance and charge resistance were measured in the same manner as for the pre-endurance (initial) ones. The post-endurance resistance was divided by the pre-endurance resistance to determine the resistance increment.

Table 1

| No. 1-1 1-2 1-3 1-4 | | | | | | | |
|---|---|---|---|---|---|---|---|
| Electrode material | Composite particle | | | NCA | NCA | NCA | NCA |
| | | | | LTAF | LTAF | LiNbOs | LiNbOs |
| | Sulfide SE | | | LPS | - | LPS | - |
| Evaluation | Discharge resistance increment SOC 50% | | 0.1 s | 8% | 16% | 22% | 30% |
| | | | 2s | 11% | 17% | 20% | 31% |
| | | | 10 s | 11% | 22% | 21% | Above 40% |
| | Charge resistance increment SOC 50% | | 0.1 s | 8% | 17% | 23% | 33% |
| | | | 1 s | 13% | 20% | 25% | 35% |
| | | | 5 s | 16% | 20% | 24% | 34% |

Table 1 above shows a tendency that resistance increment decreases when the composite particles are covered with sulfide SE (comparison between No. 1-1 and 1-2, comparison between No. 1-3 and 1-4).

Table 1 above shows a tendency that resistance increment decreases in the case of fluoride SE as compared to oxide SE (comparison between No. 1-1 and 1-3). It may be because an interface between fluoride SE and sulfide SE is relatively readily formed.

<Experiment 2>

In Experiment 2, the solid concentration of the electrode material was investigated. Electrode materials and all-solid-state batteries according to Nos. 2-1 to 2-7 specified in Table 2 below were produced. The solid concentrations of these electrode materials are different from each other. The specifications of No. 2-1 are the same as those of No. 1-2 in Experiment 1. The specifications of Nos. 2-2 to 2-7 are the same as those of No. 1-1 in Experiment 1, except the solid concentration.

<<Evaluation>>

In the same manner as in Experiment 1, resistance increment was measured. Table 1 below gives the discharge resistance increment after a lapse of 2 seconds from the start of discharging as well as the charge resistance increment after a lapse of 5 seconds from the start of charging.

Table 2

| No. | 2-1 | 2-2 | 2-3 | 2-4 | 2-5 | 2-6 | 2-7 |
|---|---|---|---|---|---|---|---|
| Solid concentration | - | 74% | 75.5% | 78% | 79% | 82% | 85% |
| High-shear mixing duration | - | 1 h | 3 h | 4 h | 4 h | 4 h | 4 h |
| Evaluation | Discharge resistance increment SOC 50% 2 s | 17% | 16% | 14% | 11% | 12% | 13% | 15% |
| | Charge resistance increment SOC 50% 5 s | 20% | 19% | 18% | 16% | 16% | 17% | 18% |

When the solid concentration was 74%, solid-liquid separation started to occur 1 hour after the start of high-shear mixing (No. 2-2). Because of this, it was difficult to continue high-shear mixing for 1 hour or more.

When the solid concentration was 75.5%, solid-liquid separation started to occur 3 hours after the start of high-shear mixing (No. 2-3). Because of this, it was difficult to continue high-shear mixing for 3 hours or more.

When the solid concentration was within the range of 78 to 85%, it was possible to carry out stable high-shear mixing for 4 hours or more (Nos. 2-4 to 2-7).

When the solid concentration was within the range of 75.5 to 82%, resistance increment tended to be low. It may be because dispersion at the time of high-shear mixing may have been facilitated (Nos. 2-3 to 2-6).

**Claims**

1. An electrode material comprising:

   a composite particle (10);
   a sulfide solid electrolyte (20); and
   a solvent (30), wherein
   the electrode material has a solid concentration of 72% or more,
   the composite particle (10) includes an active material (11) and a fluoride solid electrolyte (12),
   the fluoride solid electrolyte (12) covers at least part of a surface of the active material (11), and
   the sulfide solid electrolyte (20) is adhered to the composite particle (10).

2. The electrode material according to claim 1, wherein the fluoride solid electrolyte (12) is represented by a formula (1):

   $$Li_{6-nx}M_xF_6 \ldots \qquad (1)$$

   where

   x satisfies $0 < x < 2$,
   M is at least one selected from the group consisting of semimetal atoms and metal atoms except Li, and,
   n represents an oxidation number of M.

3. The electrode material according to claim 2, wherein M in the formula (1) includes an atom whose oxidation number is +4.

4. The electrode material according to claim 2, wherein M in the formula (1) includes an atom whose oxidation number is +3.

5. The electrode material according to claim 2, wherein M in the formula (1) includes at least one selected from the group consisting of Ca, Mg, Al, Y, Ti, and Zr.

6. The electrode material according to any one of claims 1 to 5, having a solid concentration from 75.5 to 82%.

7. A method of producing an electrode material, the method comprising:

(a) preparing a composite particle (10); and
(b) producing an electrode material that includes the composite particle (10), a sulfide solid electrolyte (20), and a solvent (30), wherein

the composite particle (10) includes an active material (11) and a fluoride solid electrolyte (12),
the fluoride solid electrolyte (12) covers at least part of a surface of the active material (11),
the electrode material has a solid concentration of 72% or more,
the (b) includes:

(b1) high-shear mixing a mixture that includes the composite particle (10), the sulfide solid electrolyte (20), and the solvent (30); and
(b2) adding an additional amount of the solvent (30) to the mixture, and
the (b1) and the (b2) are carried out alternately, twice or more for each.

8. A method of producing an all-solid-state battery, the method comprising:

(c) producing an electrode that includes the electrode material according to any one of claim 1 to 5; and
(d) producing an all-solid-state battery (200) that includes the electrode.

FIG.1

```
                    ┌─────────────┐
                    │    START    │
                    └──────┬──────┘
                           │
                           ▼                    ╭─ a
                    ┌──────────────────────┐
                    │ PREPARE COMPOSITE    │
                    │ PARTICLE             │
                    └──────────┬───────────┘
                               │
                               ▼                ╭─ b
        ┌──────────────────────────────────────┐
        │ PRODUCE ELECTRODE                     │
        │ MATERIAL                              │
        │     │                                 │
        │     ▼              ╭─ b1              │
        │  ┌──────────────────┐                 │
        │  │ HIGH-SHEAR MIX   │                 │
        │  └────────┬─────────┘                 │
        │           │                           │
        │           ▼          ╭─ b2            │
        │  ┌────────────────────┐               │
        │  │ ADD ADDITIONAL     │               │
        │  │ AMOUNT OF          │               │
        │  │ SOLVENT            │               │
        │  └────────────────────┘               │
        └──────────────────┬────────────────────┘
                           │
                           ▼                    ╭─ c
                    ┌──────────────────────┐
                    │ PRODUCE ELECTRODE    │
                    └──────────┬───────────┘
                               │
                               ▼                ╭─ d
                    ┌──────────────────────┐
                    │ PRODUCE ALL-SOLID-   │
                    │ STATE BATTERY        │
                    └──────────┬───────────┘
                               │
                               ▼
                    ┌─────────────┐
                    │     END     │
                    └─────────────┘
```

FIG.2

FIG.3

200

Europäisches Patentamt
European Patent Office
Office européen des brevets

# EUROPEAN SEARCH REPORT

Application Number

EP 23 18 0738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/220924 A1 (PANASONIC IP MAN CO LTD [JP]) 4 November 2021 (2021-11-04) * claims 1, 7 * * figures 1, 2 * * paragraphs [0088] – [0090] * ----- | 1-8 | INV. H01M4/139 H01M4/36 H01M4/62 H01M10/0562 H01M10/058 |
| A | US 2021/359303 A1 (SAKAIDA MASASHI [JP] ET AL) 18 November 2021 (2021-11-18) * claims 1, 2, 12 * * figure 1 * ----- | 1-8 | ADD. H01M10/052 |

TECHNICAL FIELDS SEARCHED (IPC)

H01M

The present search report has been drawn up for all claims

| Place of search | Date of completion of the search | Examiner |
|---|---|---|
| Munich | 24 November 2023 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 0738

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2023

| Patent document cited in search report | | Publication date | Patent family member(s) | | Publication date |
|---|---|---|---|---|---|
| WO 2021220924 | A1 | 04-11-2021 | CN | 115428186 A | 02-12-2022 |
| | | | EP | 4145559 A1 | 08-03-2023 |
| | | | JP | WO2021220924 A1 | 04-11-2021 |
| | | | US | 2023042911 A1 | 09-02-2023 |
| | | | WO | 2021220924 A1 | 04-11-2021 |
| US 2021359303 | A1 | 18-11-2021 | CN | 113396494 A | 14-09-2021 |
| | | | EP | 3933978 A1 | 05-01-2022 |
| | | | JP | WO2020174868 A1 | 23-12-2021 |
| | | | US | 2021359303 A1 | 18-11-2021 |
| | | | WO | 2020174868 A1 | 03-09-2020 |

EPO FORM P0459

For more details about this annex : see Official Journal of the European Patent Office, No. 12/82

**EP 4 303 958 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022110387 A
- JP 2014154407 A